# DEMANDE DE BREVET EUROPEEN

(11) **EP 2 238 830 A1**
(43) Date de publication de la demande: **13.10.2010**
(21) Numéro de dépôt: 10350005.4
(22) Date de dépôt: 06.04.2010
(51) Int. Cl.: A01K 61/00

(54) **Dispositif de pose d'une gaine tubulaire**

(30) Priorité: 07.04.2009 FR 0901689
(71) Demandeur: F.T.G.C., 44340 Bouguenais (FR)
(72) Inventeur: Metenier, Pascal, 44120 Vertou (FR)
(74) Mandataire: Tournel, Jean Louis

(57) **Abrégé**

L'invention a pour objet un dispositif de mise en place d'une gaine tubulaire (2) de protection autour d'au moins un plateau support (4) la dite gaine tubulaire (2) étant enroulée sur une bobine (6), ce dispositif étant **caractérisé en ce que** le ou les plateaux sont logés dans un magasin (7) tubulaire disposé en aval de la bobine (6) lequel magasin tubulaire présente en amont une pièce (8) d'engagement de la gaine sur le magasin et ce magasin est supporté par des appuis (9) simples afin de laisser circuler en continu la gaine entre les appuis et la face externe dudit magasin.

## Description

L'invention se rapporte à un dispositif de mise en place d'une gaine de protection autour d'au moins un plateau destiné notamment à un support d'aquaculture.

L'aquaculture des mollusques tels les huitres utilise de plus en plus des dispositifs d'élevage en pleine mer appelés lanternes japonaises.

Une lanterne japonaise est constituée de plusieurs plateaux soutenus par un ensemble de cordes. Les plateaux sont écartés les uns des autres et portent les mollusques.

Pour limiter l'action des prédateurs et des courants, un filet tubulaire est mis en place sur cet ensemble de plateaux. Ce filet est souvent élastique donc expansible.

Ce filet est livré en grande longueur à l'état enroulé sur une bobine pour ensuite être mis en place autour des plateaux qu'il va enserrer.

Les plateaux font environ 40 à 50cm de diamètre alors que le filet, lorsqu'il est élastique, fait environ 10 cm de large à l'état enroulé.

A ce jour, les filets sont coupés à la longueur requise et posés à la main éventuellement avec accessoire. Il faut souvent deux personnes pour réaliser cette opération.

La faible épaisseur du plateau complique le positionnement du plateau par rapport à la gaine.

Ce n'est donc pas pratique.

L'invention vise un dispositif qui facilite la mise en place d'une gaine de protection et qui permet une installation en continu et quasi en automatique , le sectionnement de la gaine se faisant après mise en place de la gaine sur les plateaux de la lanterne.

A cet effet, l'invention a pour objet un dispositif de pose d'une gaine tubulaire de protection autour d'au moins un plateau support la dite gaine tubulaire étant enroulée sur une bobine, ce dispositif étant **caractérisé en ce** que le ou les plateaux sont logés dans un magasin tubulaire disposé en aval de la bobine lequel magasin tubulaire présente en amont une pièce dite d'engagement de la gaine sur le magasin et ce magasin est supporté par des appuis simples afin de laisser circuler en continu la gaine entre les appuis et la face externe dudit magasin.

L'invention sera bien comprise à l'aide de la description ci après faite à titre d'exemple non limitatif en regard du dessin qui représente
FIG 1 : Une lanterne
FIG 2 : un dispositif de mise en place d'une gaine
FIG 3 : une variante d'un dispositif de mise en place d'une gaine

En se reportant au dessin, on voit un dispositif 1 de pose d'une gaine 2 tubulaire de protection autour d'au moins un plateau support 3 la dite gaine tubulaire étant enroulée sur une bobine.

Le plateau support est souvent circulaire.

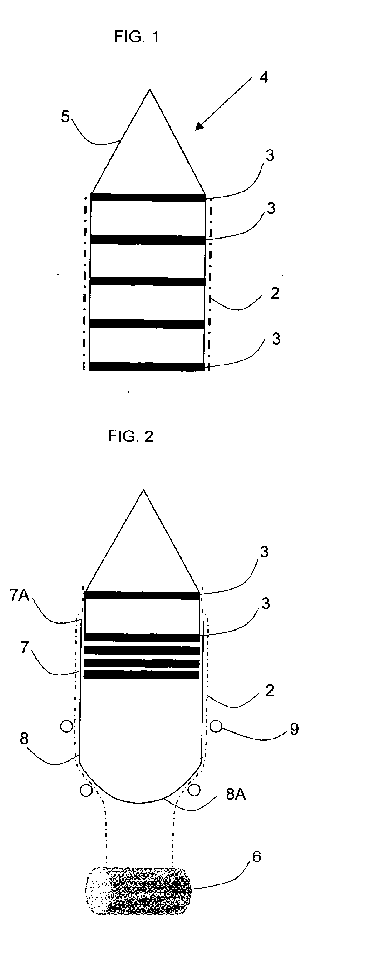

Il s'agit ici de placer une gaine autour d'un support 4 d'élevage de mollusques ce support étant communément appelé lanterne japonaise (figure 1).

Un tel support 4 d'élevage est constitué de plusieurs plateaux 3 soutenus par un ensemble de cordages 5. Le bord des plateaux est fixé sur les cordages et les plateaux sont distants les uns des autres de 10 à 20 cm environ. Différents moyens de fixation existent pour l'accrochage des plateaux. Les cordages sont réunis en leur point haut pour suspendre la lanterne à un élément porteur tel un flotteur.

Il est nécessaire de placer autour de ces plateaux une gaine 2 tubulaire de protection qui peut être élastique. Cette gaine va protéger les mollusques. Elle doit laisser circuler l'eau pour alimenter les mollusques et donc il s'agit souvent d'un filet à mailles plus ou moins grandes. Au cours du grossissement, il faudra changer la gaine et diminuer le nombre de mollusques.

La gaine 2 est fournie en grande longueur enroulée sur une bobine 6.

Pour placer cette gaine autour des plateaux supports 3, le ou les plateaux 3 sont logés dans un magasin 7 tubulaire disposé en aval de la bobine 6 lequel magasin tubulaire présente, en amont une pièce 8 dite d'engagement de la gaine sur le magasin et ce magasin 7 est supporté par des simples appuis 9 afin de laisser circuler en continu la gaine entre les appuis et la face externe dudit magasin.

La gaine va toujours circuler sur le magasin depuis l'amont vers l'aval.

Le magasin 7 est un cylindre de section interne au moins égale à la section externe des plateaux. Il est ouvert vers l'aval par rapport au sens de déplacement de la gaine depuis la bobine de stockage.

Le chargement des plateaux dans le magasin et le déchargement est fait par la même ouverture 7A.

Pour la mise en place de la gaine, on introduit dans le magasin les plateaux déjà fixés sur les cordages, on déplace la gaine depuis la bobine 6 vers la pièce de mise en forme, on enfile cette gaine sur la pièce 8 d'engagement disposée en amont du magasin 7 et on glisse la gaine autour du magasin jusqu'au niveau de son ouverture 7A. On sort le premier plateau en tirant sur les cordages. Lorsque le premier plateau est sorti, on accroche la gaine sur ce plateau, par exemple au moyen d'une ceinture. Ainsi à chaque fois que l'on va tirer sur le cordage, le premier plateau va faire sortir le suivant et tirer également sur la gaine. On pose alors si nécessaire une ceinture au niveau du plateau. Lorsque la lanterne est totalement sortie, on coupe la gaine et on recommence les étapes précédentes.

Il est préférable de positionner le magasin selon un axe vertical ; l'ouverture 7A étant orientée vers le haut afin que les plateaux sortis restent dans l'axe de traction et dans l'axe de la gaine. On peut certes prévoir une autre orientation mais cela complique le procédé.

La pièce 8 d'engagement est, par exemple figure 2, conformée en forme d'ogive, la pointe étant dirigée vers l'amont. Elle peut être de forme conique à génératrice droite ou courbe ou hémisphérique (génératrice courbe). Elle est contigüe au magasin et solidaire dudit magasin. Sa longueur pourrait être très limitée.

Elle présente une face 8A en dépouille pour à la fois servir de cône d'entrée pour assister la mise en place de la gaine sur le magasin et servir de surface d'appui à des moyens d'appui simple pour soutenir le magasin. Des moyens d'appui 9 doivent donc se situer au niveau de cette face 8A en dépouille pour soutenir le magasin. D'autres moyens d'appui situés en aval servent exclusivement à maintenir vertical le magasin.

Le magasin 7 est donc porté et maintenu en sa position verticale par des appuis simples afin que la gaine puisse circuler le long du magasin. Par appui simple on comprendra une face en appui sur une autre face avec possibilité de déplacement d'une face par rapport à l'autre face.

Des appuis simples servent à caler latéralement le magasin et d'autres appuis coopérant avec la pièce d'engagement 8 qui est solidaire du magasin servent à soutenir le magasin. On comprend bien que sur les appuis reprenant la charge, il y a contact entre la surface d'appui et la surface de la pièce d'engagement ce qui va influer sur la circulation de la gaine.

Ces appuis 9 simples sont des patins accessoirement vibrants ou sont réalisés par des surfaces mobiles telles la face roulante de roues 9 réparties radialement et s'appuyant sur la face externe du dispositif ou par des portés sphériques.

Ces roues 9 ont donc pour objectif de centrer l'ensemble par rapport à une structure porteuse et pour certaines de soutenir le magasin.

Ces roues peuvent être motorisées et actionnées pendant les périodes de traction de la gaine afin de faciliter le passage de la gaine au niveau des appuis sur la face externe. Il en est de même pour des patins vibrants. Le dispositif comprend un moyen de mise en fonctionnement des moteurs des roues ou des patins vibrants en synchronisation avec le déplacement de la gaine et le déplacement de la lanterne.

Les patins auront le bord relevé afin de ne pas accrocher la gaine.

On a également imaginé la présence de jets d'air qui dirigés vers la pièce d'engagement la soulève légèrement le temps de déplacer la gaine.

Un paramètre doit être pris en compte à savoir la force de traction sur le filet et le frottement du filet sur le magasin. En effet, il ne faut pas que la traction sur la gaine entraine le magasin vers le haut.

Pour y remédier, on peut augmenter le poids du magasin mais il ne faut pas que le magasin soit trop lourd sinon la gaine risque de se déchirer au niveau du passage des appuis.

On a donc trouvé une solution pour limiter le déplacement vers le haut du magasin.

La pièce 8 d'engagement ou éventuellement le magasin présente localement une gorge 10 dans laquelle pénètrent des appuis qui coopèrent avec la dite gorge pour verrouiller en translation le dispositif.

Ces appuis vont s'appuyer sur la face latérale 10 A de la gorge qui est tournée vers l'aval et ainsi empêcher le soulèvement. Cette face latérale agit comme une contre-dépouille et limite le déplacement de l'ensemble constitué par la pièce de mise en forme et le magasin.

Il est intéressant de prévoir des moyens d'ajustement du poids afin de permettre un léger soulèvement permettant d'augmenter l'écart entre l'appui simple et la face externe de la pièce d'engagement pour faciliter le passage de la gaine. Il peut s'agir d'une cavité au fond du magasin apte à recevoir des poids.

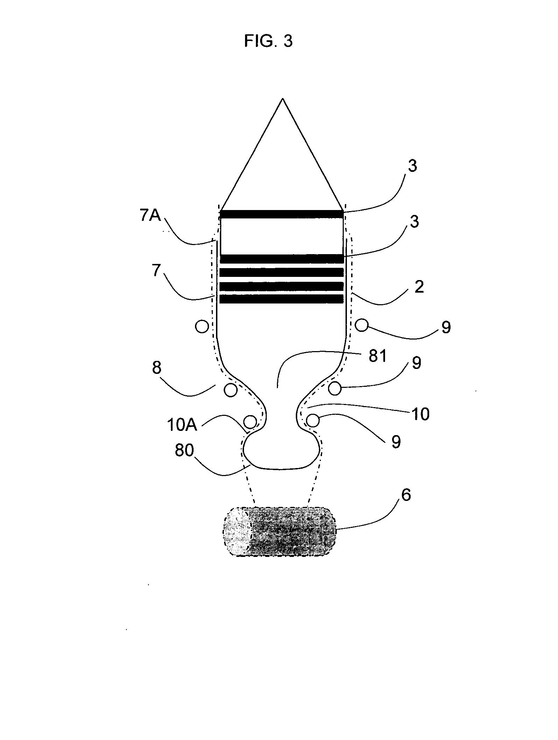

Sur la figure 3, on voit depuis le bas, un support de bobine, la pièce 8 d'engagement constituée par une première forme 80 sensiblement sphérique reliée à une forme 81 conique par un cou 10, la pièce conique étant surmontée par le magasin. C'est au niveau du cou que l'on positionnera des appuis 9 afin de caler en translation l'ensemble. Le cou constitue la gorge nécessaire au verrouillage. La structure porteuse de cet ensemble n'est pas représentée.

Après avoir introduit la lanterne dans le magasin, on va extraire celle-ci au moyen d'un dispositif de levage ( non représenté) agissant sur les cordages de la lanterne et en même temps on va tirer sur la gaine vers le haut de sorte que la gaine va venir se placer automatiquement autour des plateaux de la lanterne.

Lorsque la lanterne sera complètement extraite du magasin, on sectionnera le filet et on recommence le processus.

La paroi du magasin peut présenter des lumières pour réduire les frottements.

## Revendications

1. Dispositif de mise en place d'une gaine tubulaire de protection autour d'au moins un plateau support la dite gaine tubulaire étant enroulée sur une bobine, ce dispositif étant **caractérisé en ce que** le ou les plateaux sont logés dans un magasin (7) tubulaire disposé en aval de la bobine (6) lequel magasin tubulaire présente en amont une pièce (8) d'engagement de la gaine sur le magasin et ce magasin est supporté par des appuis (9) simples afin de laisser circuler en continu la gaine entre les appuis et la face externe dudit magasin.

2. Dispositif de mise en place d'une gaine tubulaire selon la revendication 1 **caractérisé en ce que** le magasin est positionné selon un axe vertical avec son ouverture (7A) étant orientée vers le haut.

3. Dispositif de mise en place d'une gaine tubulaire selon la revendication 1 ou 2 **caractérisé en ce que** la pièce (8) d'engagement présente une face en dépouille pour le soutien du magasin.

4. Dispositif de mise en place d'une gaine tubulaire selon l'une quelconque des revendications précédentes **caractérisé en ce que** la pièce (8) d'engagement ou le magasin présente localement une gorge (10) dans laquelle pénètrent des appuis (9) qui coopèrent avec la dite gorge pour verrouiller en translation le dispositif.

5. Dispositif de mise en place d'une gaine tubulaire selon la revendication 4 **caractérisé en ce que** la pièce d'engagement est constituée par une première forme (80) sensiblement sphérique reliée à une forme (81) conique par un cou (10).

6. Dispositif de mise en place d'une gaine tubulaire selon la revendication 1 ou 4 **caractérisé en ce que** les appuis (9) simples sont réalisés par des surfaces mobiles telles la face roulantes de roues (9).

7. Dispositif de mise en place d'une gaine tubulaire selon la revendication 6 **caractérisé en ce que** les roues (9) sont motorisées.

8. Dispositif de mise en place d'une gaine tubulaire selon la revendication 7 **caractérisé en ce que** le dispositif comprend un moyen de mise en fonctionnement des moteurs des roues en synchronisation avec le déplacement de la gaine.

9. Dispositif de mise en place d'une gaine tubulaire selon l'une quelconque des revendications 1 à 5 **caractérisé en ce que** les appuis sont vibrants.

10. Dispositif de mise en place d'une gaine tubulaire selon l'une quelconque des revendications 1 à 5 **caractérisé en ce que** les appuis sont pourvus de jets d'air.

11. Dispositif de mise en place d'une gaine tubulaire selon l'une quelconque des revendications 1 à 10 **caractérisé en ce qu'**il comprend un moyen d'ajustement du poids du magasin.

## Revendications modifiées

### Revendications modifiées conformément à la règle 137(2) CBE.

**1.** Dispositif de mise en place d'une gaine (2)tubulaire de protection autour d'au moins un plateau (3) support la dite gaine tubulaire étant enroulée sur une bobine, ce dispositif étant **caractérisé en ce que** le ou les plateaux sont logés dans un magasin (7) tubulaire disposé en aval de la bobine (6) lequel magasin tubulaire présente en amont une pièce (8) d'engagement de la gaine (2) sur le magasin et ce magasin est supporté par des appuis (9) simples afin de laisser circuler en continu la gaine (2) entre les appuis et la face externe dudit magasin.

**2.** Dispositif de mise en place d'une gaine tubulaire selon la revendication 1 **caractérisé en ce que** le magasin est positionné selon un axe vertical avec son ouverture (7A) étant orientée vers le haut.

**3.** Dispositif de mise en place d'une gaine tubulaire selon la revendication 1 ou 2 **caractérisé en ce que** la pièce (8) d'engagement présente une face en dépouille pour le soutien du magasin.

**4.** Dispositif de mise en place d'une gaine tubulaire selon l'une quelconque des revendications précédentes **caractérisé en ce que** la pièce (8) d'engagement ou le magasin présente localement une gorge (10) dans laquelle pénètrent des appuis (9) qui coopèrent avec la dite gorge pour verrouiller en translation le dispositif.

**5.** Dispositif de mise en place d'une gaine tubulaire selon la revendication 4 **caractérisé en ce que** la pièce (8) d'engagement est constituée par une première forme (80) sensiblement sphérique reliée à une forme (81) conique par un cou (10).

**6.** Dispositif de mise en place d'une gaine tubulaire selon la revendication 1 ou 4 **caractérisé en ce que** les appuis (9) simples sont réalisés par des surfaces mobiles telles la face roulantes de roues (9).

**7.** Dispositif de mise en place d'une gaine tubulaire selon la revendication 6 **caractérisé en ce que** les roues (9) sont motorisées.

**8.** Dispositif de mise en place d'une gaine tubulaire selon la revendication 7 **caractérisé en ce que** le dispositif comprend un moyen de mise en fonctionnement des moteurs des roues en synchronisation avec le déplacement de la gaine.

**9.** Dispositif de mise en place d'une gaine tubulaire selon l'une quelconque des revendications 1 à 5 **caractérisé en ce que** les appuis sont vibrants.

**10.** Dispositif de mise en place d'une gaine tubulaire selon l'une quelconque des revendications 1 à 5 **caractérisé en ce que** les appuis sont pourvus de jets d'air.

**11.** Dispositif de mise en place d'une gaine tubulaire selon l'une quelconque des revendications 1 à 10 **caractérisé en ce qu'**il comprend un moyen d'ajustement du poids du magasin.
